# EUROPEAN PATENT SPECIFICATION

(11) **EP 1 853 028 B1**
(45) Date of publication and mention of the grant of the patent: **27.02.2013**
(21) Application number: 06113557.0
(22) Date of filing: 05.05.2006
(51) Int. Cl.: H04L 29/06, H04L 12/58

(54) **Method and system for sending secure messages**
Verfahren und System zur sicheren Übertragung von Nachrichten
Procédé et système pour la transmission sécurisée des messages

(43) Date of publication of application: 07.11.2007
(73) Proprietor: Research In Motion Limited, Waterloo, ON N2L 3W8 (CA)
(72) Inventor: Brown, Michael K, Kitchener Ontario N2M 2Z2 (CA); Kirkup, Michael G., Waterloo, Ontario N2J 4Y3 (CA); Brown, Michael S, Waterloo Ontario N2K 4B1 (CA)
(74) Representative: Patel, Binesh

(56) References cited:
- EP-A- 1 653 655
- WO-A-2005/107133
- US-A1- 2004 133 774

## Description

The present application relates to methods and systems for sending secure messages and, in particular, to a method and system that automatically retrieves a certificate for encoding a secure message.

Electronic mail ("e-mail") messages may be encoded using one of a number of known protocols. Some of these protocols, such as Secure Multiple Internet Mail Extensions ("S/MIME") for example, rely on public and private encryption keys to provide confidentiality and integrity, and on a Public Key Infrastructure (PKI) to communicate information that provides authentication and authorization. Data encrypted using a public key of a private key/public key pair can only be decrypted using the corresponding private key of the pair. Accordingly, a sender can secure a message by encrypting the message using the recipient's public key prior to sending the message.

A recipient's public key may be made publicly available through a certificate associated with the recipient. A certificate associated with an individual typically includes the public key of the individual, as well as other identification-related information. Recipients can also make use of certificates to verify the identity of the sender and for non-repudiation protocols.

When a sender sends a message to one or more recipients, a messaging application, such as Microsoft Outlook™ or Lotus Notes™, retrieves the certificates for the recipients, and encodes the message to each recipient using information extracted from the certificates. As an example, the messaging application may use public key information extracted from the certificate in order to encrypt the message to the recipient.

Certificates may be stored in memory on the device or system sending the message. In particular, the certificates may be stored within a key store that the messaging application may access in order to retrieve the certificates. If a certificate is not available in the key store, the sender may not be able to send the message until the certificate is obtained. In some existing systems, the user manually locates the certificates for the recipients or invokes a secondary application to search for the missing certificates. In some other existing systems, the messaging application automatically searches for and downloads the required certificates once the user requests that the message be sent. This search and download process can take a significant amount of time, which can result in a noticeable delay in sending the message.

WO-A-2005/107133 discloses a system for sending secure messages. In one example, on initiation of a message sending sequence, one or more certificates for each message recipient are retrieved from a key store, or if unavailable in the key store, from one or more certificate services.

Accordingly, it would be advantageous to provide for a method and/or system that improves the user experience in composing and sending secure messages.

The present application describes a user device and method for securely sending messages to a recipient. The described device and method preferably initiate a search for a certificate needed to encrypt a message to a particular recipient prior to receiving a send instruction from the user. The method may include determining when a user changes the recipients for the message and, as the user composes the message, determining whether the requisite certificates are stored locally on the device or need to be obtained from a remote source. If the certificates required are not on the device, then a search of the remote source is initiated. The detection of changes to the recipient list and the initiation of any required searches occurs prior to receipt of a send instruction from the user.

In one aspect, the present application preferably provides a method for securely sending messages from a sending device to a recipient over a computer network, the sending device comprising a messaging application for composing a message to one or more recipients, each recipient having an associated certificate, each certificate comprising a recipient-specific public key for use by the sending device in encrypting the message for transmission to the associated recipient, the sending device comprising a memory storing one or more certificates in a key store, the method comprising the steps of: detecting input of a new recipient in an address field of the message; in response to the detection of a new recipient, determining whether the key store comprises a valid certificate for said new recipient;if the key store does not comprise a valid certificate for the new recipient, initiating a search of a remote source for said valid certificate through said computer network; and downloading said valid certificate, comprising a public key for said new recipient wherein said steps of detecting, determining, and initiating are performed prior to receiving a user instruction to send the message.

In another aspect, the present application preferably provides a user device for sending secure messages to a recipient over a computer network, the user device comprising: a display for rendering a user interface showing a message, the user interface comprising an address field of the message; a user input device for receiving user input; a memory, comprising a key store for storing one or more certificates; a processor for interacting with said display, said memory, and said user input device; a messaging application executable by said processor for composing and sending the message; a search triggering component executable by said processor for detecting input of a new recipient in said address field, and in response to detection of input of a new recipient determining whether said key store contains a valid certificate for said new recipient and if not initiating a search for said valid certificate; and a certificate retrieval module executable by said processor for searching a remote source for said valid certificate and downloading said valid certificate, comprising a public key for said new recipient wherein said search triggering component is adapted to detect input of the new recipient and instruct said certificate retrieval module to initiate a search for said valid certificate prior to receipt of a user instruction to send the message when said search triggering component determines that said key store does not contain said valid certificate.

In yet another aspect, the present application preferably provides a machine-readable medium executable upon the processor of the user device for implementing the method outlined above.

Other aspects of the present application will be apparent to those of ordinary skill in the art from a review of the following detailed description in conjunction with the drawings.

### BRIEF DESCRIPTION OF THE DRAWINGS

Reference will now be made, by way of example, to the accompanying drawings which show example embodiments of the present application, and in which:

Figure 1 shows a block diagram of an example embodiment of a user device;

Figure 2 shows a block diagram of an example embodiment of a host system;

Figure 3 diagrammatically shows an example certificate chain;

Figure 4 shows, in flowchart form, a method of securely sending messages from a sending device to recipients over a computer network;

Figure 5 shows an embodiment of a user interface of a messaging application on a mobile device; and

Figure 6 shows, in flowchart form, an example method for detecting a change in message recipients.

Similar reference numerals may have been used in different figures to denote similar components.

### DESCRIPTION OF EXAMPLE EMBODIMENTS

Embodiments of the present application are not limited to any particular operating system, mobile device architecture, server architecture, or computer programming language.

The present application makes reference to mobile communications devices; however, embodiments needs not be limited to mobile devices. The present application describes methods and systems that may be embodied in a range of client devices that are capable of sending and receiving messages, including personal computers, mobile devices, telephones, or other term inal devices.

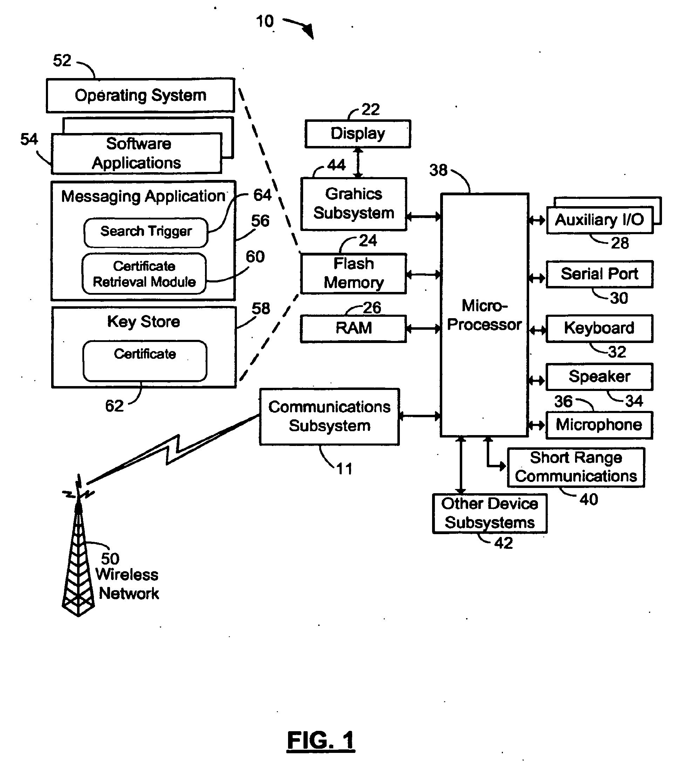

Referring now to the drawings, Figure 1 is a block diagram of an example embodiment of a user device 10. In some embodiments, the user device 10 is a two-way, electronic communications device having data and possibly also voice communication capabilities. In at least one example embodiment, the user device 10 has the capability to exchange messages with other devices and computer systems. Depending on the functionality provided by the user device 10, in various embodiments the user device may be a multiple-mode communication device configured for both data and voice communications, a smartphone, a personal digital assistant enabled for wireless communication, or a mobile computer system enabled for wireless communication, among other things.

The device 10 includes a communication subsystem 11. In one embodiment, the communication subsystem 11 may include a receiver, a transmitter, and associated components such as one or more, preferably embedded or internal, antenna elements, and a processing module such as a digital signal processor (DSP). As will be apparent to those skilled in the field of communications, the particular design of the communication subsystem 11 will be dependent upon the communication network in which the device 10 is intended to operate.

Signals received by the device 10 from a wireless communication network 50 are input to the receiver of the communication subsystem 11, which may perform such common receiver functions as signal amplification, frequency down-conversion, filtering, channel selection and the like. In a similar manner, signals to be transmitted are processed, including modulation and encoding for example, by the DSP and input to the transmitter for digital to analog conversion, frequency up conversion, filtering, amplification and transmission over the wireless communication network 50.

The device 10 includes a processor that controls the overall operation of the device. In one embodiment, the processor comprises microprocessor 38. The microprocessor 38 interacts with the communications subsystem 11 and also interacts with further device subsystems such as a graphics subsystem 44, flash memory 24, random access memory (RAM) 26, auxiliary input/output (I/O) subsystems 28, serial port 30, keyboard or keypad 32, speaker 34, microphone 36, a short-range communications subsystem 40, and any other device subsystems generally designated as 42. The graphics subsystem 44 interacts with the display 22 and renders graphics and/or text upon the display 22.

Operating system software 52 and various software applications 54 executed by the microprocessor 38 are, in one example embodiment, stored in a persistent store such as flash memory 24 or similar storage element. Those skilled in the art will appreciate that the operating system 52, software applications 54, or parts thereof, may be temporarily loaded into a volatile store such as RAM 26.

The microprocessor 38, in addition to its operating system functions, enables execution of software applications 54 on the device. A predetermined set of software applications 54 which control basic device operations, including data and voice communication applications for example, will normally be installed on the device 10 during manufacture. Further software applications 54 may also be loaded onto the device 10 through the network 50, an auxiliary I/O subsystem 28, serial port 30, short-range communications subsystem 40 or any other suitable subsystem 42, and installed by a user in the RAM 26 or a non-volatile store for execution by the microprocessor 38.

In a data communication mode, a received signal such as a text message or Web page download will be processed by the communication subsystem 11 and input to the microprocessor 38, which will preferably further process the received signal for output to the display 22 through the graphics subsystem 44, or alternatively to an auxiliary I/O device 28. A user of device 10 may also compose data items within a software application 54, such as email messages for example, using the keyboard 32 in conjunction with the display 22 and possibly an auxiliary I/O device 28 such as, for example, a thumbwheel. Such composed items may then be transmitted over a communication network through the communication subsystem 11.

The serial port 30 in Figure 1 would normally be implemented in a personal digital assistant (PDA)-type communication device for which synchronization with a user's desktop computer (not shown) may be desirable, but is an optional device component. Such a port 30 would enable a user to set preferences through an external device or software application and would extend the capabilities of the device by providing for information or software downloads to the device 10 other than through a wireless communication network.

A short-range communications subsystem 40 is a further component which may provide for communication between the device 10 and different systems or devices, which need not necessarily be similar devices. For example, the subsystem 40 may include an infrared device and associated circuits and components or a Bluetooth^{™} communication module to provide for communication with similarly enabled systems and devices. The device 10 may be a handheld device.

Wireless mobile network 50 is, in an example embodiment, a wireless packet data network, (e.g. Mobitex^{™} or DataTAC^{™}), which provides radio coverage to mobile devices 10. Wireless mobile network 50 may also be a voice and data network such as GSM (Global System for Mobile Communication) and GPRS (General Packet Radio System), CDMA (Code Division Multiple Access), or various other third generation networks such as EDGE (Enhanced Data rates for GSM Evolution) or UMTS (Universal Mobile Telecommunications Systems). In some embodiments, the wireless mobile network 50 may com prise an IEEE 802.11 (WiFi) network, iDEN (Integrated Digital Enhanced Network), EvDO (1x Evolution-Data Optimized) network, or HSDPA (High-Speed Downlink Packet Access) network. It will be appreciated that the wireless mobile network 50 may be any other type of wireless network for providing the device 10 with connectivity to remote networks.

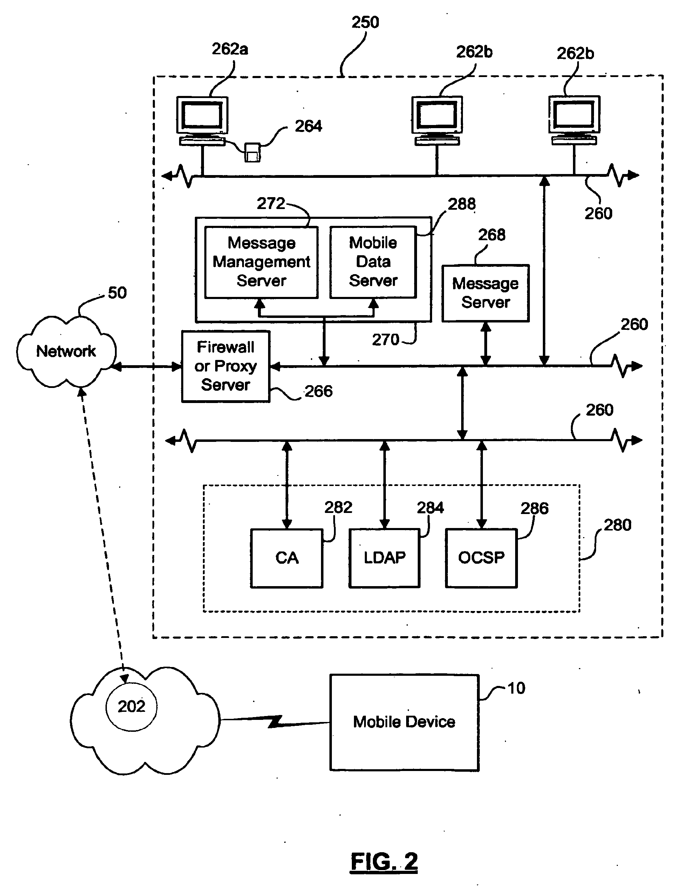

Reference is now made to Figure 2, which shows a block diagram of an example embodiment of a host system 250. Host system 250 may be a corporate office or other local area network (LAN), or may instead be a home office computer or some other private system, for example. In this example, host system 250 is depicted as a LAN of an organization to which a user of mobile device 10 belongs.

Host system 250 comprises a number of network components connected to each other by way of the LAN. For instance, a user's desktop computer 262a with an accompanying cradle 264 for the user's mobile device 10 is situated on host system 250. Cradle 264 for mobile device 10 may be coupled to computer 262a by a serial or a Universal Serial Bus (USB) connection, for example. Other user computers 262b are also situated on host system 250, and each may or may not be equipped with an accompanying cradle 264 for a mobile device. Cradle 264 facilitates the loading of information (e.g. private symmetric encryption keys to facilitate secure communications between mobile device 10 and host system 250) from user computer 262a to mobile device 10, and may be particularly useful for bulk information updates often performed in initializing mobile device 10 for use. The information downloaded to mobile device 10 may include certificates used in the exchange of messages. It will be understood by persons skilled in the art that user computers 262a, 262b will typically be also connected to other peripheral devices not explicitly shown in Figure 2.

Furthermore, only a subset of network components of the host system 250 are shown in Figure 2 for ease of exposition, and it will be understood by persons skilled in the art that the host system 250 will comprise additional components not explicitly shown. More generally, the host system 250 may represent a smaller part of a larger network of the organization, and may comprise different components and/or be arranged in different topologies than that shown in the example of Figure 2.

In this example, mobile device 10 communicates with the host system 250 through a node 202 of wireless network 50 and a shared network infrastructure 224 such as a service provider network or the public Internet. Access to the host system 250 may be provided through one or more routers, and computing devices of the host system 250 may operate from behind a firewall or proxy server 266.

In a variant implementation, the host system 250 comprises a wireless VPN router (not shown) to facilitate data exchange between the host system 250 and the mobile device 10. A VPN connection may be a Transmission Control Protocol (TCP)/ I P or User Datagram Protocol (UDP)/ I P connection to deliver the messages directly to mobile device 10 in this variant implementation.

Messages intended for a user of mobile device 10 are initially received by a message server 268 of the host system 250. Such messages may originate from any of a number of sources. For instance, a message may have been sent by a sender from a computer 262b within host system 250, from a different mobile device (not shown) connected to wireless network 50 or to a different wireless network, or from a different computing device or other device capable of sending messages, via the shared network infrastructure 224, and possibly through an application service provider (ASP) or Internet service provider (ISP), for example.

Message server 268 typically acts as the primary interface for the exchange of messages, particularly e-mail messages, within the organization and over the shared network infrastructure 224. Each user in the organization that has been set up to send and receive messages is typically associated with a user account managed by message server 268. One example of a message server 268 is a Microsoft Exchange^{™} Server. In some implementations, the host system 250 may include multiple message servers 268. Message server 268 may also be adapted to provide additional functions beyond message management, including the management of data associated with calendars and task lists, for example.

When messages are received by message server 268, they are typically stored in a message store, from which messages can be subsequently retrieved and delivered to users. For instance, an e-mail client application operating on a user's computer 262a may request the e-mail messages associated with that user's account stored on message server 268. These messages may then be retrieved from message server 268 and stored locally on computer 262a.

When operating mobile device 10, the user may wish to have e-mail messages retrieved for delivery to the handheld. An e-mail client application operating on mobile device 10 may also request messages associated with the user's account from message server 268. The e-mail client may be configured (either by the user or by an administrator, possibly in accordance with an organization's information technology (IT) policy) to make this request at the direction of the user, at some pre-defined time interval, or upon the occurrence of some pre-defined event. In some implementations, mobile device 10 is assigned its own e-mail address, and messages addressed specifically to mobile device 10 are automatically redirected to mobile device 10 as they are received by message server 268.

To facilitate the wireless communication of messages and message-related data between mobile device 10 and com ponents of the host system 250, a number of wireless communications support components 270 may be provided. In this example implementation, wireless communications support components 270 include a message management server 272, for example. Message m anagem ent server 272 is used to specifically provide support for the management of messages, such as e-mail messages, that are to be handled by mobile devices 10. Generally, while messages are still stored on message server 268, message management server 272 can be used to control when, if, and how messages should be sent to the mobile device 10. Message management server 272 also facilitates the handling of messages composed on the mobile device 10, which are sent to message server 268 for subsequent delivery.

For example, message management server 272 may: monitor the user's "mailbox" (e.g. the message store associated with the user's account on message server 268) for new e-mail messages; apply user-definable filters to new messages to determine if and how the messages will be relayed to the user's mobile device 10; compress and encrypt new messages (e.g. using an encryption technique such as Data Encryption Standard (DES) or Triple DES) and push them to mobile device 10 via the shared network infrastructure 224 and wireless network 50; and receive messages composed on mobile device 10 (e.g. encrypted using Triple DES), decrypt and decompress the composed messages, re-format the composed messages if desired so that they will appear to have originated from the user's computer 262a, and re-route the composed messages to the message server 268 for delivery.

Certain properties or restrictions associated with messages that are to be sent from and/or received by mobile device 10 can be defined (e.g. by an administrator in accordance with IT policy) and enforced by message management server 272. These may include whether mobile device 10 may receive encrypted and/or signed messages, minimum encryption key sizes, whether outgoing messages must be encrypted and/or signed, and whether copies of all secure messages sent from mobile device 10 are to be sent to a pre-defined copy address, for example.

Message management server 272 may also be adapted to provide other control functions, such as only pushing certain message information or pre-defined portions (e.g. "blocks") of a message stored on message server 268 to the mobile device 10. For example, when a message is initially retrieved by the mobile device 10 from the message server 268, the message management server 272 is adapted to push only the first part of a message to the mobile device 10, with the part being of a pre-defined size (e.g. 2 KB). The user can then request more of the message, to be delivered in similar-sized blocks by the message management server 272 to the mobile device 10, possibly up to a maximum pre-defined message size.

Accordingly, the message management server 272 facilitates better control over the type of data and the amount of data that is communicated to the mobile device 10, and can help to minimize potential waste of bandwidth or other resources.

It will be understood by persons skilled in the art that the message management server 272 need not be implemented on a separate physical server in the host system 250 or other network. For example, some or all of the functions associated with the message management server 272 may be integrated with the message server 268, or some other server in the host system 250. Furthermore, the host system 250 may comprise multiple message management servers 272, particularly in variant implementations where a large number of mobile devices 10 need to be supported.

In one aspect, embodiments of the present application relate to certificates used in the processing of encoded messages, such as e-mail messages that are encrypted and/or signed. While Simple Mail Transfer Protocol (SMTP), RFC822 headers, and Multipurpose Internet Mail Extensions (MIME) body parts may be used to define the format of a typical e-mail message not requiring encoding, Secure/MIME (S/MIME), a version of the MIME protocol, may be used in the communication of encoded messages (i.e. in secure messaging applications). S/MIME enables end-to-end authentication and confidentiality, and protects data integrity and privacy from the time an originator of a message sends a message until it is decoded and read by the message recipient. Other known standards and protocols may be employed to facilitate secure message communication, such as Pretty Good Privacy^{™} (PGP), OpenPGP, and others known in the art.

Secure messaging protocols such as S/MIME rely on public and private encryption keys to provide confidentiality and integrity, and on a Public Key Infrastructure (PKI) to communicate information that provides authentication and authorization. Data encrypted using a public key of a private key/public key pair can only be decrypted using the corresponding private key of the pair, and vice-versa. Private key information is never made public, whereas public key information is shared.

For example, if a sender wishes to send a message to a recipient in encrypted form, the recipient's public key is used to encrypt a message, which can then be decrypted only using the recipient's private key. Alternatively, in some encoding techniques, a one-time session key is generated and used to encrypt the body of a message, typically with a symmetric encryption technique (e.g. Triple DES). The session key is then encrypted using the recipient's public key (e.g. with a public key encryption algorithm such as RSA), which can then be decrypted only using the recipient's private key. The decrypted session key can then be used to decrypt the message body. The message header may be used to specify the particular encryption scheme that must be used to decrypt the message. Other encryption techniques based on public key cryptography may be used in variant implementations. However, in each of these cases, only the recipient's private key may be used to facilitate decryption of the message, and in this way, the confidentiality of messages can be maintained.

An encoded message may be encrypted, signed, or both encrypted and signed. The authenticity of public keys used in these operations is validated using certificates. A certificate is a digital document issued by a certificate authority (CA). Certificates are used to authenticate the association between users and their public keys, and essentially, provides a level of trust in the authenticity of the users' public keys. Certificates contain information about the certificate holder, with certificate contents typically formatted in accordance with an accepted standard (e.g. X.509).

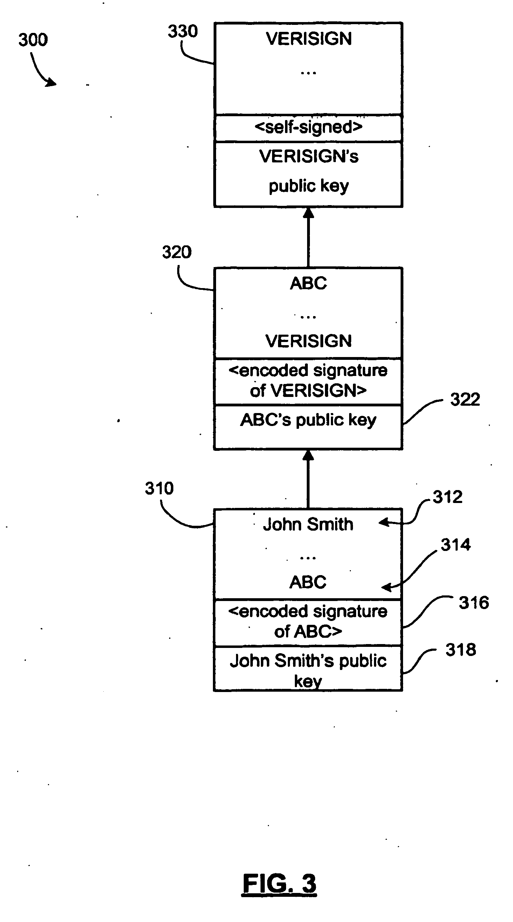

Consider Figure 3, in which an example certificate chain 300 is shown. Certificate 310 issued to "John Smith" is an example of a certificate issued to an individual, which may be referred to as an end entity certificate. End entity certificate 310 typically identifies the certificate holder 312 (*i.e.* John Smith in this example) and the issuer of the certificate 314, and includes a digital signature of the issuer 316 and the certificate holder's public key 318. Certificate 310 will also typically include other information and attributes that identify the certificate holder (e.g. e-mail address, organization name, organizational unit name, location, etc.).

For a public key to be trusted, its issuing organization must be trusted. The relationship between a trusted CA and a user's public key can be represented by a series of related certificates, also referred to as a certificate chain. The certificate chain 300 can be followed to determ ine the validity of a certificate.

The issuer 314 of the certificate 310 may have its own certificate 320. Certificate 320 may already be stored on the computing device, or it may need to be retrieved from a remote certificate store or source (e.g. a public or private Lightweight Directory Access Protocol (LDAP) server). If certificate 320 is already stored in the recipient's computing device and the certificate has been designated as trusted by the recipient, then certificate 310 is considered to be trusted since it chains to a stored, trusted certificate.

However, in the example shown in Figure 3, certificate 330 is also required to verify the trust status of certificate 310. Certificate 330 is self-signed, and is referred to as a "root certificate". Accordingly, certificate 320 may be referred to as an "intermediate certificate" in the certificate chain 300. Assuming a chain to the root certificate can be determined for a particular end entity certificate, the chain may contain zero, one, or multiple intermediate certificates. If the certificate 330 is a root certificate issued by a trusted source (from a large certificate authority such as Verisign or Entrust, for example), then the certificate 310 may be considered to be trusted since it chains to a trusted certificate. The implication is that both the sender and the recipient of the message trust the source of the root certificate 330. If a certificate cannot be chained to a trusted certificate, the certificate may be considered to be "not trusted".

Certificate servers store information about certificates and lists identifying certificates that have been revoked. These certificate servers can be accessed to obtain certificates and to verify certificate authenticity and revocation status. For example, an LDAP server may be used to obtain certificates, and an Online Certificate Status Protocol (OCSP) server may be used to verify certificate revocation status.

Standard e-mail security protocols typically facilitate secure message transmission between mobile or non-mobile computing devices. Referring again to Figures 1 and 2, in order that signed and/or encrypted messages received from remote users may be read at mobile device 10 and in order to send encrypted messages to those remote users, mobile device 10 is adapted to store certificates and associated public keys of other individuals. The mobile device 10 may include a designated key store 58 within which one or more certificates 62 may be stored. In many embodiments, the key store 58 may be a defined area within the flash memory 24 and/or RAM 26. Certificates stored on a user's computer 262a will typically be downloaded from computer 262a to the mobile device 10 through cradle 264, for example.

Certificates stored on computer 262a and downloaded to mobile device 10 are not limited to certificates associated with individuals but may also include certificates issued to CAs, for example. Certain certificates stored in computer 262a and/or the mobile device 10 can also be explicitly designated as "trusted" by the user. The one or more certificates 62 stored within the key store 58 include the public key associated with the individual associated with a given certificate 62. This enables the messaging application 56 to encrypt messages addressed to the individual using the individual's public key.

The mobile device 10 may also be adapted to store a private key of a public key/private key pair associated with the mobile device user, so that the mobile device 10 can sign outgoing messages composed on mobile device 10, and decrypt messages sent to the user encrypted with the user's public key. The private key may be downloaded to mobile device 10 from the user's computer 262a through cradle 264, for example. The private key is preferably exchanged between the computer 262a and mobile device 10 so that the user may share one identity and one method for accessing messages.

User computers 262a, 262b can obtain certificates from a number of sources, for storage on computers 262a, 262b and/or mobile devices (e.g. mobile device 10). These certificate sources may be private (e.g. dedicated for use within an organization) or public, may reside locally or remotely, and may be accessible from within an organization's private network or through the Internet, for example. In the example shown in Figure 2, multiple PKI servers 280 associated with the organization reside on the host system 250. PKI servers 280 include a CA server 282 for issuing certificates, an LDAP server 284 used to search for and download certificates (e.g. for individuals within the organization), and an OCSP server 286 used to verify the revocation status of certificates.

Certificates may be retrieved from LDAP server 284 by a user computer 262a, for example, to be downloaded to mobile device 10 via cradle 264. LDAP server 284 may also be accessed directly (i.e. "over the air" in this context) by the mobile device 10, and the mobile device 10 may search for and retrieve individual certificates through a mobile data server 288. Similarly, mobile data server 288 may be adapted to allow the mobile device 10 to directly query OCSP server 286 to verify the revocation status of certificates.

Other sources of certificates (not shown) may include a Windows^{™} certificate store, another secure certificate store on or outside the host system 250, and smart cards, for example.

Referring again to Figure 1 , the device 10 further includes a messaging application 56 configured to send and receive messages in accordance with one or more secure messaging protocols. For example, in one embodiment the messaging application 56 is configured to send and receive encoded messages in accordance with the S/MIME protocol. The messaging application 56 includes a certificate retrieval module 60 for initiating a search for an individual certificate from, for example, a LDAP server and/or for verifying the revocation status of a certificate. Although Figure 1 shows the certificate retrieval module 60 as being a part of the messaging application 56 it will be appreciated that the certificate retrieval module 60 may be implemented partly or wholly as a separate application that is invoked or triggered by the messaging application 56.

The messaging application 56 may further include a search triggering component 64 for determining when to initiate a search for a certificate. For example, in connection with a message composed in the messaging application 56 and addressed to a first recipient, the search triggering component 64 may check the key store 58 to determine whether a certificate corresponding to the first recipient is available. If the correct certificate is not located in the key store 58, or if the recipient's certificate is expired or otherwise unusable, then the search triggering component 64 may instruct the certificate retrieval module 60 to obtain an up-to-date certificate for the recipient.

In accordance with the present application, the search triggering component 64 determines whether a certificate is required and triggers the necessary search before the user of the messaging application 56 requests that the message be sent. Accordingly, the search for missing certificates is initiated prior to receiving a send request from the user. Once the user inputs the send request, for example by clicking a "send" button or selecting a "send" menu item, then the search triggering component 64 may determine whether any searches are in-progress or whether any further certificates are missing.

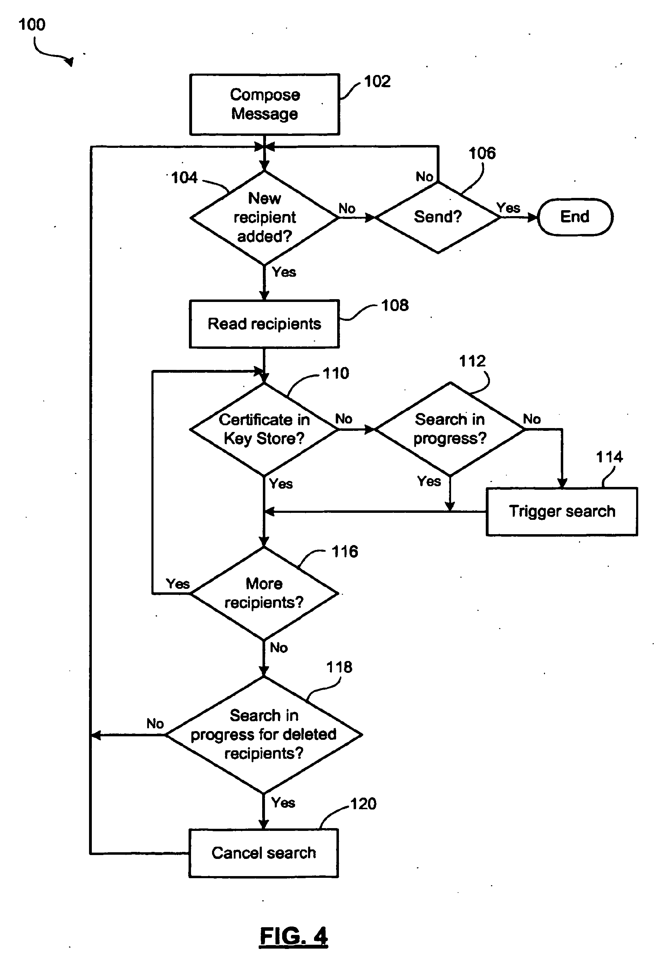

Reference is now made to Figure 4, which shows, in flowchart form, a method 100 of securely sending messages from a sending device to recipients over a computer network. The method 100 begins in step 102 with a user of the sending device initiating a "compose" operation within a messaging application. The "compose" operation may include starting a new message, replying to a received message, forwarding a received message, or any other operation that involves creating a message for transmission to one or more recipients. It will be appreciated that the method 100 is invoked or applied only when the user indicates that the message is to be send securely. In some embodiments, this may be default setting within the messaging application or it may be an option selectable by the user.

As the user composes the message, the mobile device 10 (Fig. 1) and, in particular, the search triggering component 64 (Fig. 1), determines when a change has been made to the recipient list. In one embodiment, the search triggering component 64 determines when a new recipient address has been added to the message. The search triggering component 64 may also detect whether a change has been made to the list or recipients, for example to delete a previous recipient and/or change the address of a recipient. A change to a recipient address may, in some embodiments, be treated or interpreted as the deletion of the former recipient and the addition of a new recipient.

Referring still to Figure 4, in step 104 the mobile device 10 determines whether a new recipient has been designated for the message. There are a number of methods or mechanisms for determining whether a new recipient has been added to the message, and any suitable such method or mechanism may be used in connection with step 104. Some of the possible mechanisms are outlined further below; however, those of ordinary skill in the art will appreciate the range of alternatives and variants that would provide this function.

If no new recipient is detected, then the method 100 cycles to step 106 to determine whether the user has input a send command, for example by clicking a "send" button or selecting a "send" command from a menu. If no send command is detected, then the method 100 returns to step 104 to continue to monitor for new recipients.

If a new recipient is detected in step 104, then the method 100 continues to step 108 where the recipients are read. For example, the addresses in the "TO:" field of an e-mail message may be read. Alternatively, the addresses may have been read in step 104.

For each recipient address read in step 108, in step 110 the mobile device 10 determines whether a valid certificate is present in the key store 58 (Fig. 1). If a valid certificate is located on the mobile device 10, then in step 116 the method 100 assesses whether there are more recipient addresses and, if so, loops back to step 110 to try to locate the corresponding certificate(s).

If no valid certificate is located on the mobile device 10 in step 110, then the method 100 proceeds to step 112, where the search triggering component 64 assesses whether a search is currently in progress for the desired certificate by the certificate retrieval module 60. If so, then the method 100 skips to step 116. Otherwise, in step 114 the search triggering component 64 instructs the certificate retrieval module 60 to initiate a search for the desired certificate.

Those skilled in the art will appreciate that various modifications may be made to the method 100 without materially affecting its operation. For example, some steps may be performed contemporaneously with other steps or incorporated into other steps, the order of some steps may be altered, and certain steps may be added and/or eliminated. By way of example, the assessment of whether a valid certificate is on the mobile device 10 in step 110 and the consequent search trigger in step 114 may be performed only for recipients identified in step 104 as having been added. This change may eliminate the need to assess whether a search is in progress in step 112. Other variations or modification will be understood by those skilled in the art.

Following step 116, the method 100 assesses whether there are certificate searches in progress for recipients that have been removed or deleted from the recipient list for the message. If so, then in step 120 the search triggering component 64 instructs the certificate retrieval module 60 to cancel the pending searches. The method 100 then returns to step 104 to continue to monitor for changes to the recipient list for the message until the user inputs a send command.

Once the user inputs the send command, the message is encrypted and sent, as per the applicable standard, such as S/MIME. It will be appreciated that in some embodiments the search triggering component 64 may repeat its assessment of whether the correct certificates are available following the initiation of the send command.

It will be appreciated that the method 100 detects the addition of new recipients (including changes in previously entered addresses) and initiates the certificate retrieval process, if needed, prior to user input of the send command. This process provides for a faster user experience since the certificates may all have been retrieved, or at least the searches for them will have been initiated, by the time the user provides a send command. Thus, the delay between the user input of the send command and the actual sending of the message is shortened.

The method 100 may further include steps of checking certificates for validity. These steps may be applied to certificates located in the key store 58 (Fig. 1) or retrieved from remote certificate services. The validity of a certificate may change over time for a number of reasons, for example the certificate may expire. In one embodiment, a security policy may require that the validity status of a certificate be updated periodically. Accordingly, in step 110 the messaging application 56 may assess whether certificates located in the key store 58 have been validated within the specified period. If the certificate has not been validated within the specified period, the certificate may be considered "stale", and the validity of the certificate may be verified prior to usage. Typically, the validity of a certificate may be checked through a certificate authority or certificate status provider.
In some cases, the certificate status provider may be the same as the certificate service used to retrieve a certificate. If the required certificate is not valid, then a search may be initiated by the search triggering component 64.

Once the required certificates have been retrieved and validated, and once the user inputs a send command, the messaging application 56 then proceeds to encrypt the message using information in the certificates, such as each recipient's public key.

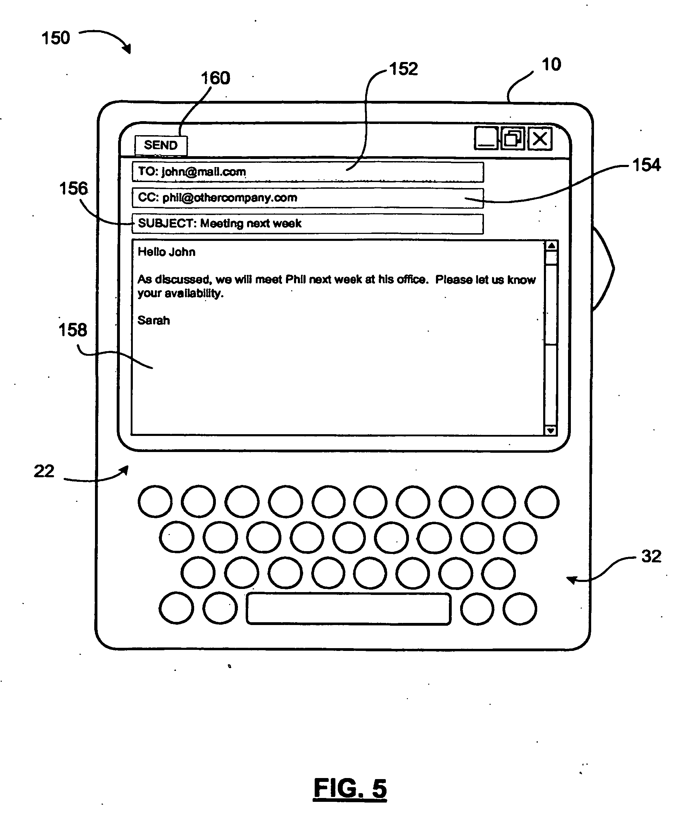

As noted above, the detection of whether a new recipient has been added to a message, embodied in step 104 of the method 100, may be implemented in a number of ways. Reference is now made to Figure 5, which shows an embodiment of a user interface 150 of the messaging application 56 on the mobile device 10. The user interface 150 is rendered upon the display 22 of the mobile device 10. The user interacts with the user interface 150 through the keyboard 32, keypad, trackball, thumbwheel, stylus, or any other input device.

The user interface 150 in this embodiment includes a toolbar area at the top of the display 22 that may include a number of icons or menu options. For example, a send button 160 may be displayed. The user may select the send button 160 using an input device to input a send command. The user interface 150 shown in Figure 5 depicts a "compose" view showing a draft message.

The user interface 150 includes a number of fields, such as address fields 152, 154, subject line field 156, and body field 158. At any one time only one (or possibly none) of the fields may be designated as "active". An "active" field means that any user input will be related to the active field. For example, the active field may contain the cursor, if any, such that any alphanumeric characters input via the keyboard 32 will be rendered in the active field.

The address fields 152, 154 may include a TO field 152 and a CC field 154. Those skilled in the art will appreciate that other embodiments may include a BCC field, or other address fields. In some embodiments, multiple addressees in an address field 152, 154 are separated by com m as or sem i-colons. In another embodiment, only one addressee is permitted in an address field 152, 154 and the user has the option of adding another address field, for example another TO field 152, if the user wishes to address the message to another recipient.

The user inputs recipient addresses into the address fields 152, 154. For example, as shown in Figure 5, the user has addressed the draft message to john@mail.com and phil@othercompany.com. In some cases, the user may type the recipient address into the address field 152, 154. In other cases, the messaging application 56 may have a stored association between the recipient's address and a name. For example, the messaging application 56 may recognize the name "John Smith" as corresponding to john@mail.com, which enables the user to type "John Smith" instead of the formal address. In other cases, the messaging application 56 may provide the user with a picklist or menu of recipients. The list may be drawn from a stored set of contacts. Those skilled in the art will appreciate the range of mechanisms and methods possible for receiving user input regarding recipients.

The body field 158 contains the text of the message. In other embodiments, the draft message may include embedded or attached non-textual elements, including HTML formatting, images, and/or files. In some cases, the body field 158 may contain the text or content of previous messages in a message chain to which the present message is a reply or forward.

In one embodiment, the search triggering component 64 (Fig. 1) determ ines whether a new recipient has been added to the address fields 152, 154 by monitoring user input in connection with these fields. In one example embodiment, the search triggering component 64 may take note of any keyboard 32 input when the active field is one of the address fields 152, 154 and, once the active field becomes another field, it may read the address fields to determ ine if any new recipients have been added or if any old recipients have been deleted or changed. In another embodiment, the search triggering component 64 may also or alternatively monitor the address fields 152, 154 for the presence of a semi-colon, which is commonly used to separate addresses. In some cases, addressed may be input by the user through a picklist or menu of known addresses or distribution lists. In this case, the search triggering component 64 may note if such a menu is accessed. Other mechanisms or methods may also be employed to detect when a user inputs characters or makes changes to the content of the address fields 152, 154.

In yet another embodiment, the search triggering component 64 may detect when the focus (*i.e.* active field) is one of the address fields 152, 154, and may note when the focus changes to another field, such as the body field 158. With many messaging applications, a user typically begins composing a message by addressing the message to the intended recipient. The user then types the content of the message before inputting a send command. Accordingly, the search triggering component 64 may be configured to note when the active focus changes from the address fields 152, 1 54, to the body field 158, or to any other field, and in response to that change it may then determine if any changes have been made to the recipient list and/or if any certificates are required.

Those skilled in the art will appreciate that the search triggering component 64 may detect events, such as when the active field changes or when user input is received, through a number of mechanisms. For example, the operating system 52 (Fig. 1) may allow the search triggering component 64 to register to receive a notice or message if a specified event occurs. The search triggering component 64 may monitor certain registers or memory locations, arrange to receive or detect certain interrupts, or otherwise determine aspects of the state of the mobile device 10. The precise implementation may be a matter of design choice and may depend on the features of operating system 52 and the mobile device 10.

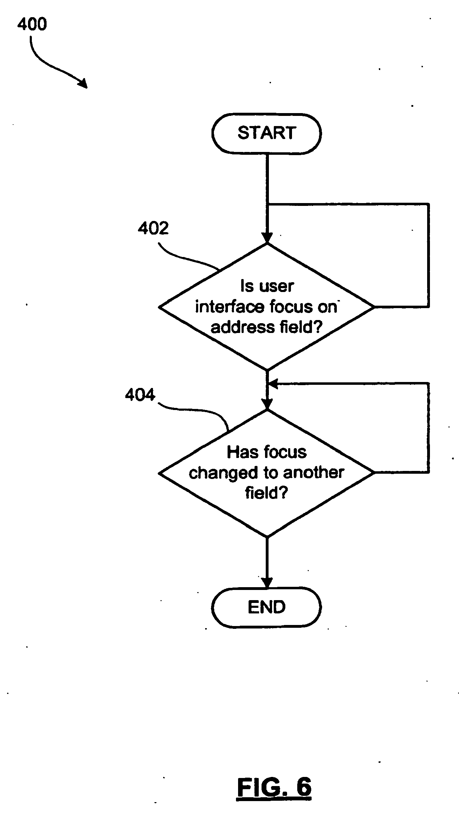

Reference is now made to Figure 6, which shows, in flowchart form, an example method 400 for detecting a change in message recipients. The method 400 begins in step 402 with an assessment of whether the focus is on one of the address fields, *i.e.* whether one of the address fields is "active". If not, then the method 400 loops. If one of the address fields becomes active, then the method 400 moves to step 404 to monitor whether the focus has changed. In one embodiment, step 404 may determine whether the focus changes from the current address field to any other field. In another embodiment, step 404 may monitor whether the focus changes from any of the address fields to any non-address field. In yet another embodiment, step 404 involves monitoring whether the focus changes to particular fields, such as the body field 158 (Fig. 5).

If a change in focus away from the current address field is detected in step 404 then the mobile device 10 (Fig. 1) may conclude that the user likely changed the recipients. In the embodiment shown in Figure 6, the method 400 may involve reading list of recipients from the address fields and comparing the recipients with a previously stored list of recipients. If a change in the list is detected then the method 400 may go on to determine if the requisite certificates are available on the device and imitate searches for those that are missing, as was described above in connection with Figure 4. The search triggering component 64 may then store the current list of recipients in temporary memory for use in performing the comparison again if the user returns focus to the address fields, for example to add or delete a recipient.

In another embodiment, the method 400 may presume following step 404 that a change to the recipient list was likely and may assess whether the requisite certificates are available for all the recipients and initiate the search process described in connection with Figure 4 for any missing or invalid certificates. Other variations will be apparent to those of ordinary skill in the art.
Certain adaptations and modifications of the described embodiments can be made. Therefore, the above discussed embodiments are considered to be illustrative and not restrictive.

## Claims

1. A method for securely sending messages from a sending device (10) to a recipient over a computer network (50), the sending device (10) comprising a messaging application (56) for composing a message to one or more recipients, each recipient having an associated certificate (62), each certificate (62) comprising a recipient-specific public key for use by the sending device (10) in encrypting the message for transmission to the associated recipient, the sending device (10) comprising a memory (24, 26) storing one or more certificates (62) in a key store (58), the method comprising the steps of:
detecting input of a new recipient in an address field (152, 154) of the message;
in response to the detection of a new recipient, determining whether the key store (58) comprises a valid certificate for said new recipient;
if the key store does not comprise a valid certificate for the new recipient, initiating a search of a remote source (280) for said valid certificate through said computer network (50); and
downloading said valid certificate, comprising a public key for said new recipient;
wherein said steps of detecting, determining, and initiating are performed prior to receiving a user instruction to send the message.

2. The method claimed in claim 1, wherein said step of detecting comprises detecting that said address field (152, 154) is active and detecting user input to said address field (152, 154).

3. The method claimed in claim 2, wherein said step of detecting user input comprises detecting keyboard (32) input.

4. The method claimed in claim 1, wherein the messaging application (56) comprises a user interface (150) having a compose message view and wherein said user interface (150) comprises a plurality of fields, and said plurality of fields comprises said address field (152, 154), and wherein said step of detecting comprises detecting that said address field (152, 154) is designated as an active field and then detecting a change in designation such that another of said plurality of fields (156, 158) is said active field and, in response to detecting the change in designation, detecting input of the new recipient in the address field (152, 154).

5. The method claimed in claim 4, wherein said plurality of fields comprises two or more address fields (152, 154) and wherein said another of said plurality of fields (156, 158) excludes said address fields (152, 154).

6. The method claimed in any one of the preceding claims, wherein said step of detecting input of said new recipient comprises reading a current list of recipients from said address field (152, 154), comparing said current list of recipients to a stored previous list, and saving said current list of recipients as said stored previous list.

7. The method claimed in any one of the preceding claims, wherein said step of initiating comprises determining whether an active search is in progress for said valid certificate and, if not, initiating said search.

8. The method claimed in any one of the preceding claims, wherein the method further comprises a step of determining if an active search is in progress for a certificate corresponding to a recipient removed from said address field (152, 154) and, if so, issuing an instruction to cancel said active search.

9. The method claimed in any one of the preceding claims, wherein the method further comprises the steps of encrypting the message with said public key and transmitting the encrypted message, wherein said steps of encrypting and transmitting are performed in response to receipt of said user instruction to send.

10. A user device (10) for sending secure messages to a recipient over a computer network (50), the user device (10) comprising:
a display (22) for rendering a user interface (150) showing a message, the user interface (150) comprising an address field (152, 154) of the message;
a user input device (32, 42) for receiving user input;
a memory (24, 26), comprising a key store (58) for storing one or more certificates (62);
a processor (38) for interacting with said display (22), said memory (24, 26), and said user input device (32, 42);
a messaging application (56) executable by said processor (38) for composing and sending the message;
a search triggering component (64) executable by said processor (38) for detecting input of a new recipient in said address field (152, 154), and in response to detection of input of a new recipient determining whether said key store (58) contains a valid certificate for said new recipient and if not initiating a search for said valid certificate; and
a certificate retrieval module (60) executable by said processor (38) for searching a remote source (280) for said valid certificate and downloading said valid certificate, comprising a public key for said new recipient;
wherein said search triggering component (64) is adapted to detect input of the new recipient and instruct said certificate retrieval module (60) to initiate a search for said valid certificate prior to receipt of a user instruction to send the message when said search triggering component (64) determines that said key store (58) does not contain said valid certificate.

11. The user device claimed in claim 10, wherein said search triggering component (64) is adapted to detect that said address field (152, 154) is active and detect user input to said address field (152, 154).

12. The user device claimed in claim 11, wherein said search triggering component (152, 154) is adapted to detect input through said user input device (32, 42).

13. The user device claimed in claim 10, wherein said user interface (152, 154) comprises a plurality of fields, and said plurality of fields comprises said address field (152, 154), and wherein said search triggering component (64) is adapted to detect that said address field (152, 154) is designated as an active field and then detect a change in designation such that another of said plurality of fields (156, 158) is said active field , and, in response to detecting the change in designation, to detect input of the new recipient in the address field (152, 154).

14. The user device claimed in claim 13, wherein said plurality of fields comprises two or more address fields (152, 154) and wherein said another of said plurality of fields (156, 158) excludes said address fields (152, 154).

15. The user device claimed in any one of claims 10 to 14, wherein said search triggering component (64) is adapted to read a current list of recipients from said address field (152, 154), compare said current list of recipients to a stored previous list, and save said current list of recipients as said stored previous list.

16. The user device claimed in any one of claims 10 to 15, wherein said search triggering component (64) comprises a component for determining whether an active search is in progress for said valid certificate and, if not, initiating said search.

17. The user device claimed in any one of claims 10 to 16, wherein said search triggering component (64) comprises a component for determining if an active search is in progress for a certificate corresponding to a recipient removed from said address field (152, 154) and, if so, issuing an instruction to cancel said active search.

18. The user device claimed in any one of claims 10 to 17, wherein said messaging application (56) is adapted to encrypt the message with said public key and transmit the encrypted message in response to receipt of said user instruction to send.

19. The user device claimed in any one of claims 10 to 18, wherein said user device (10) comprises a handheld mobile device (10) and wherein the computer network (50) comprises a wireless network (50).

20. A machine-readable medium executable upon the processor of the user device (10) claimed in any one of claims 10 to 19, for implementing the method of any one of claims 1 to 9.

## Patentansprüche

1. Ein Verfahren zum sicheren Senden von Nachrichten von einer Sendevorrichtung (10) an einen Empfänger über ein Computernetzwerk (50), wobei die Sendevorrichtung (10) eine Nachrichtenanwendung (56) aufweist zum Verfassen einer Nachricht an einen oder mehrere Empfänger, wobei jeder Empfänger ein assoziiertes Zertifikat (62) hat, wobei jedes Zertifikat (62) einen Empfänger-spezifischen öffentlichen Schlüssel aufweist zur Verwendung durch die Sendevorrichtung (10) bei einem Verschlüsseln der Nachricht zur Übertragung an den assoziierten Empfänger, wobei die Sendevorrichtung (10) einen Speicher (24, 26) aufweist zum Speichern eines oder mehrerer Zertifikate (62) in einem Schlüsselspeicher (58), wobei das Verfahren die Schritte aufweist:
Erfassen einer Eingabe eines neuen Empfängers in einem Adressfeld (152, 154) der Nachricht;
in Reaktion auf die Erfassung eines neuen Empfängers, Bestimmen, ob der Schlüsselspeicher (58) ein gültiges Zertifikat für den neuen Empfänger aufweist;
wenn der Schlüsselspeicher kein gültiges Zertifikat für den neuen Empfänger aufweist, Initiieren eines Durchsuchens einer entfernten Quelle (280) nach dem gültigen Zertifikat durch das Computernetzwerk (50); und Herunterladen des gültigen Zertifikats, das einen öffentlichen Schlüssel für den neuen Empfänger aufweist;
wobei die Schritte des Erfassens, Bestimmens und Initiierens durchgeführt werden vor einem Empfangen einer Benutzeranweisung zum Senden der Nachricht.

2. Das Verfahren gemäß Anspruch 1, wobei der Schritt des Erfassens aufweist ein Erfassen, dass das Adressfeld (152, 154) aktiv ist, und ein Erfassen einer Benutzereingabe in das Adressfeld (152, 154).

3. Das Verfahren gemäß Anspruch 2, wobei der Schritt des Erfassens einer Benutzereingabe ein Erfassen einer Eingabe einer Tastatur (32) aufweist.

4. Das Verfahren gemäß Anspruch 1, wobei die Nachrichtenanwendung (56) eine Benutzerschnittstelle (150) aufweist, die eine Ansicht zum Verfassen von Nachrichten hat, und wobei die Benutzerschnittstelle (150) eine Vielzahl von Feldern aufweist, und wobei die Vielzahl von Feldern das Adressfeld (152, 154) aufweist, und wobei der Schritt des Erfassens ein Erfassen aufweist, dass das Adressfeld (152, 154) als ein aktives Feld bestimmt ist, und dann Erfassen einer Änderung der Bestimmung derart, dass ein anderes der Vielzahl von Feldern (156, 158) das aktive Feld ist, und in Reaktion auf das Erfassen der Änderung der Bestimmung, Erfassen einer Eingabe des neuen Empfängers in das Adressfeld (152, 154).

5. Das Verfahren gemäß Anspruch 4, wobei die Vielzahl von Feldern zwei oder mehr Adressfelder (152, 154) aufweist und wobei das andere der Vielzahl von Feldern (156, 158) die Adressfelder (152, 154) ausschließt.

6. Das Verfahren gemäß einem der vorhergehenden Ansprüche, wobei der Schritt des Erfassens einer Eingabe des neuen Empfängers aufweist ein Auslesen einer aktuellen Liste von Empfängern aus dem Adressfeld (152, 154), Vergleichen der aktuellen Liste von Empfängern mit einer gespeicherten vorherigen Liste und Speichern der aktuellen Liste von Empfängern als die gespeicherte vorherige Liste.

7. Das Verfahren gemäß einem der vorhergehenden Ansprüche, wobei der Schritt des Initiierens aufweist ein Bestimmen, ob eine aktive Suche für das gültige Zertifikat in Gange ist, und wenn nicht, Initiieren der Suche.

8. Das Verfahren gemäß einem der vorhergehenden Ansprüche, wobei das Verfahren weiter einen Schritt aufweist eines Bestimmens, ob eine aktive Suche in Gange ist für ein Zertifikat, das einem Empfänger entspricht, der aus dem Adressfeld (152, 154) entfernt ist, und wenn ja, Ausgeben einer Anweisung zum Abbrechen der aktiven Suche.

9. Das Verfahren gemäß einem der vorhergehenden Ansprüche, wobei das Verfahren weiter die Schritte aufweist eines Verschlüsselns der Nachricht mit dem öffentlichen Schlüssel und eines Übertragens der verschlüsselten Nachricht, wobei die Schritte des Verschlüsselns und Übertragens in Reaktion auf einen Empfang der Benutzeranweisung zum Senden durchgeführt werden.

10. Eine Benutzervorrichtung (10) zum Senden von sicheren Nachrichten an einen Empfänger über ein Computernetzwerk (50), wobei die Benutzervorrichtung (10) aufweist:
eine Anzeige (22) zum Darstellen einer Benutzerschnittstelle (150), die eine Nachricht zeigt, wobei die Benutzerschnittstelle (150) ein Adressfeld (152, 154) der Nachricht aufweist;
eine Benutzereingabevorrichtung (32, 42) zum Empfangen einer Benutzereingabe;
einen Speicher (24, 26), der einen Schlüsselspeicher (58) aufweist zum Speichern eines oder mehrerer Zertifikate (62);
einen Prozessor (38) zum Interagieren mit der Anzeige (22), dem Speicher (24, 26), und der Benutzereingabevorrichtung (32, 42);
eine Nachrichtenanwendung (56), die von dem Prozessor (38) ausführbar ist, zum Verfassen und Senden der Nachricht;
eine Suche-Auslösen-Komponente (64), die von dem Prozessor (38) ausführbar ist, zum Erfassen einer Eingabe eines neuen Empfängers in das Adressfeld (152, 154), und in Reaktion auf ein Erfassen einer Eingabe eines neuen Empfängers, Bestimmen, ob der Schlüsselspeicher (58) ein gültiges Zertifikat für den neuen Empfänger enthält, und wenn nicht, Initiieren einer Suche nach dem gültigen Zertifikat; und
ein Zertifikat-Abrufen-Modul (60), das von dem Prozessor (38) ausführbar ist, zum Durchsuchen einer entfernten Quelle (280) nach dem gültigen Zertifikat und Herunterladen des gültigen Zertifikats, das einen öffentlichen Schlüssel für den neuen Empfänger aufweist;
wobei die Suche-Auslösen-Komponente (64) ausgebildet ist, eine Eingabe des neuen Empfängers zu erfassen und das Zertifikat-Abrufen-Modul (60) anzuweisen, eine Suche nach dem gültigen Zertifikat zu initiieren vor einem Empfang einer Benutzeranweisung zum Senden der Nachricht, wenn die Suche-Auslösen-Komponente (64) bestimmt, dass der Schlüsselspeicher (58) das gültige Zertifikat nicht enthält.

11. Die Benutzervorrichtung gemäß Anspruch 10, wobei die Suche-Auslösen-Komponente (64) ausgebildet ist zum Erfassen, dass das Adressfeld (152, 154) aktiv ist, und zum Erfassen einer Benutzereingabe in das Adressfeld (152, 154).

12. Die Benutzervorrichtung gemäß Anspruch 11, wobei die Suche-Auslösen-Komponente (64) ausgebildet ist zum Erfassen einer Eingabe über die Benutzereingabevorrichtung (32, 42).

13. Die Benutzervorrichtung gemäß Anspruch 10, wobei die Benutzerschnittstelle (152, 154) eine Vielzahl von Feldern aufweist, und die Vielzahl von Feldern das Adressfeld (152, 154) aufweist, und wobei die Suche-Auslösen-Komponente (64) ausgebildet ist zum Erfassen, dass das Adressfeld (152, 154) als ein aktives Feld bestimmt ist, und dann Erfassen einer Änderung der Bestimmung derart, dass ein anderes der Vielzahl von Feldern (156, 158) das aktive Feld ist, und in Reaktion auf das Erfassen der Änderung der Bestimmung, Erfassen einer Eingabe des neuen Empfängers in das Adressfeld (152, 154).

14. Die Benutzervorrichtung gemäß Anspruch 13, wobei die Vielzahl von Feldern zwei oder mehr Adressfelder (152, 154) aufweist und wobei das andere der Vielzahl von Feldern (156, 158) die Adressfelder (152, 154) ausschließt.

15. Die Benutzervorrichtung gemäß einem der Ansprüche 10 bis 14, wobei die Suche-Auslösen-Komponente (64) ausgebildet ist zum Auslesen einer aktuellen Liste von Empfängern aus dem Adressfeld (152, 154), Vergleichen der aktuellen Liste von Empfängern mit einer gespeicherten vorherigen Liste und Speichern der aktuellen Liste von Empfängern als die gespeicherte vorherige Liste.

16. Die Benutzervorrichtung gemäß einem der Ansprüche 10 bis 15, wobei die Suche-Auslösen-Komponente (64) eine Komponente aufweist zum Bestimmen, ob eine aktive Suche für das gültige Zertifikat in Gange ist, und wenn nicht, Initiieren der Suche.

17. Die Benutzervorrichtung gemäß einem der Ansprüche 10 bis 16, wobei die Suche-Auslösen-Komponente (64) eine Komponente aufweist zum Bestimmen, ob eine aktive Suche in Gange ist für ein Zertifikat, das einem Empfänger entspricht, der aus dem Adressfeld (152, 154) entfernt ist, und wenn ja, Ausgeben einer Anweisung zum Abbrechen der aktiven Suche.

18. Die Benutzervorrichtung gemäß einem der Ansprüche 10 bis 17, wobei die Nachrichtenanwendung (56) ausgebildet ist zum Verschlüsseln der Nachricht mit dem öffentlichen Schlüssel und Übertragen der verschlüsselten Nachricht in Reaktion auf einen Empfang der Benutzeranweisung zum Senden.

19. Die Benutzervorrichtung gemäß einem der Ansprüche 10 bis 18, wobei die Benutzervorrichtung (10) eine handgehaltene mobile Vorrichtung (10) aufweist und wobei das Computernetzwerk (50) ein drahtloses Netzwerk (50) aufweist.

20. Ein maschinenlesbares Medium, das auf dem Prozessor der Benutzervorrichtung (10) gemäß einem der Ansprüche 10 bis 19 ausführbar ist, zum Implementieren des Verfahrens gemäß einem der Ansprüche 1 bis 9.

## Revendications

1. Procédé pour l'envoi de messages sécurisés d'un dispositif d'envoi (10) à un destinataire sur un réseau informatique (50), le dispositif d'envoi (10) comprenant une application de messagerie (56) pour composer un message à un ou plusieurs destinataires, chaque destinataire ayant un certificat associé (62), chaque certificat (62) comprenant une clé publique spécifique du destinataire à utiliser par le dispositif d'envoi (10) en cryptant le message pour sa transmission au destinataire associé, le dispositif d'envoi (10) comprenant une mémoire (24, 26) stockant un ou plusieurs certificats (62) dans une base de stockage de clés (58), le procédé comprenant les étapes consistant :
à détecter l'entrée d'un nouveau destinataire dans un champ d'adresse (152, 154) du message ;
à déterminer, en réponse à la détection d'un nouveau destinataire, si la base de stockage de clés (58) comprend un certificat valide pour ledit nouveau destinataire ;
de lancer une recherche d'une source distante (280) pour ledit certificat valide à travers ledit réseau informatique (50), si la base de stockage de clés ne comprend pas un certificat valide pour le nouveau destinataire ; et
à télécharger ledit certificat valide, comprenant une clé publique pour ledit nouveau destinataire ;
dans lequel lesdites étapes de détection, de détermination et d'initiation sont exécutées avant la réception d'une instruction utilisateur pour envoyer le message.

2. Procédé revendiqué dans la revendication 1, dans lequel ladite étape de détection comprend le fait de détecter que ledit champ d'adresse (152, 154) est actif et de détecter l'entrée d'un utilisateur à ladite zone d'adresse (152, 154).

3. Procédé revendiqué dans la revendication 2, dans lequel ladite étape de détection d'une entrée d'utilisateur comprend la détection (32) d'une entrée de clavier.

4. Procédé revendiqué dans la revendication 1, dans lequel l'application de messagerie (56) comprend une interface utilisateur (150) ayant une vue de message composé et dans lequel ladite interface utilisateur (150) comprend une pluralité de champs, et ladite pluralité de champs comprend ledit champ d'adresse (152, 154), et dans lequel ladite étape de détection comprend le fait de détecter que ledit champ d'adresse (152, 154) est désigné comme étant un champ actif, et de détecter ensuite un changement de désignation de sorte qu'un autre champ de ladite pluralité de champs (156, 158) soit ledit champ actif et de détecter, en réponse à la détection du changement dans la désignation, l'entrée du nouveau destinataire dans le champ d'adresse (152, 154).

5. Procédé revendiqué dans la revendication 4, dans lequel ladite pluralité de champs comprend deux ou plusieurs champs d'adresse (152, 154) et dans lequel ledit autre champ de ladite pluralité de champs (156, 158) exclut lesdits champs d'adresse (152, 154).

6. Procédé revendiqué dans l'une quelconque des revendications précédentes, dans lequel ladite étape de détection de l'entrée dudit nouveau destinataire comprend la lecture d'une liste actuelle de destinataires à partir dudit champ d'adresse (152, 154), la comparaison de ladite liste actuelle de destinataires à une liste stockée précédente, et la sauvegarde de ladite liste actuelle de destinataires comme ladite liste précédente stockée.

7. Procédé revendiqué dans l'une quelconque des revendications précédentes, dans lequel ladite étape d'initiation comprend le fait de déterminer si une recherche active dudit certificat valide est en cours et, sinon, lancer ladite recherche.

8. Procédé revendiqué dans l'une quelconque des revendications précédentes, dans lequel le procédé comprend en outre une étape consistant à déterminer si une recherche active d'un certificat correspondant à un destinataire retiré de ladite zone d'adresse (152, 154) est en cours et, si c'est le cas, délivrer une instruction d'annulation de ladite recherche active.

9. Procédé revendiqué dans l'une quelconque des revendications précédentes, dans lequel le procédé comprend en outre les étapes consistant à crypter le message avec ladite clé publique et à transmettre le message crypté, dans lequel lesdites étapes de cryptage et de transmission sont exécutées en réponse à la réception de ladite instruction utilisateur à envoyer.

10. Dispositif utilisateur (10) pour envoyer des messages sécurisés à un destinataire sur un réseau informatique (50), le dispositif utilisateur (10) comprenant :
un afficheur (22) pour rendre une interface utilisateur (150) affichant un message, l'interface utilisateur (150) comprenant un champ d'adresse (152, 154) du message ;
un dispositif d'entrée utilisateur (32, 42) pour recevoir une entrée utilisateur ;
une mémoire (24, 26), comprenant une base de stockage de clés (58) pour stocker un ou plusieurs certificats (62) ;
un processeur (38) pour interagir avec ledit afficheur (22), ladite mémoire (24, 26), et ledit dispositif d'entrée utilisateur (32, 42) ;
une application de messagerie (56) pouvant être exécutée par ledit processeur (38) pour composer et envoyer le message ;
un composant de déclenchement de recherche (64) pouvant être exécuté par ledit processeur (38) pour détecter l'entrée d'un nouveau destinataire dans ledit champ d'adresse (152, 154), et en réponse à la détection d'entrée d'un nouveau destinataire déterminer si ladite base de stockage de clés (58) contient un certificat valide pour ledit nouveau destinataire et s'il n'a pas lancé une recherche dudit certificat valide ; et
un module de récupération de certificat (60) pouvant être exécuté par ledit processeur (38) pour la recherche d'une source distante (280) pour ledit certificat valide et le téléchargement dudit certificat valide, comprenant une clé publique pour ledit nouveau destinataire ;
dans lequel ledit composant de déclenchement de recherche (64) est adapté pour détecter une entrée du nouveau destinataire et charger ledit certificat de récupération de module (60) de lancer une recherche dudit certificat valide avant la réception d'une instruction utilisateur pour envoyer le message lorsque ledit composant de déclenchement de recherche (64) détermine que ladite base de stockage de clés (58) ne contient pas ledit certificat valide.

11. Dispositif utilisateur revendiqué dans la revendication 10, dans lequel ledit composant de déclenchement de recherche (64) est adapté pour détecter que ledit champ d'adresse (152, 154) est actif et pour détecter l'entrée d'un utilisateur audit champ d'adresse (152, 154).

12. Dispositif utilisateur revendiqué dans la revendication 11, dans lequel ledit composant de déclenchement de recherche (152, 154) est adapté pour détecter une entrée à travers ledit dispositif d'entrée utilisateur (32, 42).

13. Dispositif utilisateur revendiqué dans la revendication 10, dans lequel ladite interface utilisateur (152, 154) comprend une pluralité de champs, et ladite pluralité de champs comprend ledit champ d'adresse (152, 154), et dans lequel ledit composant de déclenchement de recherche (64) est adapté pour détecter que ledit champ d'adresse (152, 154) est désigné comme un champ actif, et de détecter ensuite un changement de désignation de sorte que l'autre champ de ladite pluralité de champs (156, 158) soit ledit champ actif, et de détecter, en réponse à la détection du changement de désignation, une entrée du nouveau destinataire dans le champ d'adresse (152, 154).

14. Dispositif utilisateur revendiqué dans la revendication 13, dans lequel ladite pluralité de champs comprend deux ou plusieurs champs d'adresse (152, 154) et dans lequel ledit autre champ de ladite pluralité de champs (156, 158) exclut ledit champ d'adresse (152, 154).

15. Dispositif utilisateur revendiqué dans l'une quelconque des revendications 10 à 14, dans lequel ledit composant de déclenchement de recherche (64) est adapté pour lire une liste actuelle de destinataires à partir de ladite zone d'adresse (152, 154), comparer ladite liste actuelle de destinataires à une liste précédente stockée, et sauvegarder ladite liste actuelle de destinataires comme ladite liste précédente stockée.

16. Dispositif utilisateur revendiqué dans l'une quelconque des revendications 10 à 15, dans lequel ledit composant de déclenchement de la recherche (64) comprend un composant destiné à déterminer si une recherche active dudit certificat valide est en cours et, sinon, lancer ladite recherche.

17. Dispositif utilisateur revendiqué dans l'une quelconque des revendications 10 à 16, dans lequel ledit composant de déclenchement de recherche (64) comprend un composant pour déterminer si une recherche active d'un certificat correspondant à un destinataire retiré de ladite zone d'adresse (152, 154) est en cours et, si c'est le cas, délivrer une instruction d'annulation de ladite recherche active.

18. Dispositif utilisateur revendiqué dans l'une quelconque des revendications 10 à 17, dans lequel ladite application de messagerie (56) est adaptée pour crypter le message avec ladite clé publique et transmettre le message crypté en réponse à la réception de ladite instruction utilisateur à envoyer.

19. Dispositif utilisateur revendiqué dans l'une quelconque des revendications 10 à 18, dans lequel ledit dispositif utilisateur (10) comprend un dispositif mobile portable (10) et dans lequel le réseau informatique (50) comprend un réseau sans fil (50).

20. Support lisible par machine pouvant être exécuté sur le processeur du dispositif utilisateur (10) revendiqué dans l'une quelconque des revendications 10 à 19, pour la mise en oeuvre du procédé selon l'une quelconque des revendications 1 à 9.
